# EUROPEAN PATENT APPLICATION

(11) **EP 1 983 023 A1**
(43) Date of publication of application: **22.10.2008**
(21) Application number: 08150784.0
(22) Date of filing: 29.01.2008
(51) Int. Cl.: C08K 5/04, C08L 31/00, C08L 75/00, C09J 5/00

(54) **Radiation-curable composition, composite and manufacturing method thereof**

(30) Priority: 02.02.2007 JP 2007024449; 23.02.2007 JP 2007044535; 12.03.2007 JP 2007062678; 16.03.2007 JP 2007069666; 27.03.2007 JP 2007080421
(71) Applicant: JSR Corporation, Tokyo 104-8410 (JP)
(72) Inventor: Yamamura, Tetsuya, Tokyo, Tokyo 104-8410 (JP); Okamoto, Masashi, Tokyo, Tokyo 104-8410 (JP)
(74) Representative: TBK-Patent

(57) **Abstract**

A radiation-curable composition, thereby a formed body composed of a PVAresin and another adherend can be easily joined to forma composite, and the composite after joined can exhibit higher cutting resistance, is provided. The composition of the present invention comprises (A) a cycloaliphatic epoxy compound, (B) a compound having at least one hydroxyl group and a number average molecular weight of 500 or higher, and (C) a photoacid generator. Composite 1 is formed by laminating adherend 3 on one surface of PVA-formed body 2 via adhesive layer 4 composed of a cured product of the radiation-curable composition of the present invention.

## Description

### TECHNICAL FIELD

The present invention relates to a radiation-curable composition, a composite formed by using the radiation-curable composition, and a method for manufacturing the composite.

### BACKGROUND ART

A laminated film having an excellent gas barrier property has been known.

For example, there has been proposed a transparent and highly cohesive laminated product for a boil or retort which is formed by laminating a transparent primer layer; a 5-300 nm-thick thin film layer composed of an inorganic oxide; and a gas barrier coated layer formed by applying a coating agent mainly comprising an aqueous solution or water/alcohol mixed solution containing an aqueous polymer and at least one of (a) a metal alcoxide or hydrolysate thereof and (b) tin chloride and drying by heating the coating agent; sequentially on at least one side of a substrate composed of a transparent plastic material, and further laminating a polyolefin thermoplastic resin layer as a seal layer via an adhesive (see Japanese Laid-Open Patent Publication H10-722).

Also, there has been proposed a laminated film which is formed by joining a sealant film and a gas-barrier film having a ratio of (B) / (A) of 2.0 or higher wherein (A) represents an oxygen permeability rate at 23 °C and 60 percent relative humidity and (B) represents an oxygen permeability rate at 23 °C and 80 percent relative humidity, wherein an adhesive used for joining the gas-barrier film and the sealant film comprises mainly an epoxy resin and an epoxy resin curing agent, the adhesive is to form an epoxy resin cured product having a particular bone structure in an amount of 40 wt% or more (see Japanese Laid-Open Patent Publication 2003-251752).

### DISCLOSURE OF THE INVENTION

Generally, a laminated film (for example, a gas barrier film) is desired to have an excellent cutting resistance in course of manufacture. That is, the laminated film is ordinarily used after being cut into a size suitable for an intended purpose, therefore the film has a problem of peel-off (i.e. lack of an adhesive layer) at the cut part (i.e. the edge after being cut) when being cut. The peel-off not only impairs a gas barrier property at the cut part, but also increases moisture absorption of the gas barrier film, that could lead to a deformation in high temperature and high humidity.

Furthermore, the laminated film will be subjected to various stresses when used. For example, the film is subjected to a bending stress, shearing stress, and the like and a peel-off may occur in the film. Therefore, the laminated film is also desired to have an excellent adhesion property between an adherend and the adhesive layer.

In light of the above problems encountered with the prior art, it is an object of the present invention to provide a radiation-curable composition used as an adhesive and the like for joining a formed body composed of a PVA resin and an adherend made of a material which is similar or dissimilar to the material of the PVA resin of the formed body by a simple manufacturing process in a short time, and forming a composite (i.e. a laminated film and the like) having an excellent cutting resistance and an excellent adhesive strength between the adherend and the adhesive layer.

As a result of diligent study aimed at solving such problem, the inventors perfected the present invention upon discovering that a radiation-curable composition comprising particular components is used, and then, a formed body composed of a PVA resin and an adherend made of a material which is similar or dissimilar to the PVA resin of the formed body can be joined by a simple manufacturing process in a short time, and a composite (i.e. a laminated film and the like) having an excellent cutting resistance and an excellent adhesive strengthbetween the adherend and the adhesive layer can be formed.

That is, the present invention provides the following [1] to [10].
[1] A radiation-curable composition comprising (A) a cycloaliphatic epoxy compound, (B) a compound having at least one hydroxyl group and a number average molecular weight of 500 or higher, and (C) a photoacid generator.
[2] The radiation-curable composition according to [1], wherein the component (A) is (A1) a compound having two or more cycloaliphatic epoxy groups in one molecule and/or (A2) a compound having one cycloaliphatic epoxy group represented by the following formula (1). 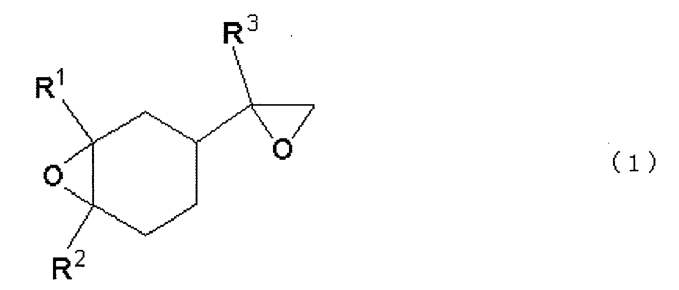 (In the formula, R¹, R², and R³ are each independently a hydrogen atom or a methyl group.)
[3] The radiation-curable composition according to [1] or [2], wherein the component (B) has a number average molecular weight of 1,000 or higher.
[4] The radiation-curable composition according to any one of [1] to [3], wherein the component (B) is a compound represented by the following formula (2).

   HO-(R⁴-O-CO-O)ₘ-(R⁵-O-CO-O)ₙ-R⁶-OH) (2)

   (In the formula, R⁴ and R⁵ are each independently a bivalent hydrocarbon group having 2 to 12 carbon atoms, R⁶ is the same as R⁴ or R⁵. m is 2 to 150, n is 0 to 150, and m+n is 2 to 200.)
[5] The radiation-curable composition according to any one of [1] to [4], comprising (D) a compound represented by the following formula (4). 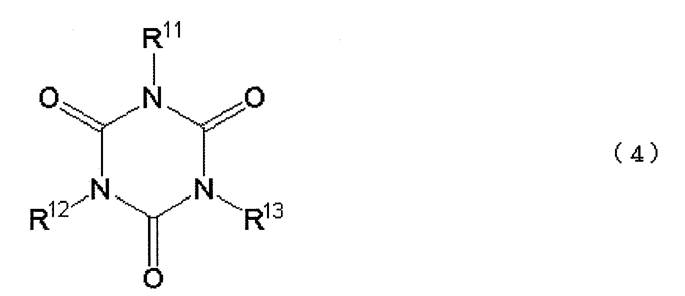 (In the formula, R¹¹, R¹², and R¹³ are each independently a monovalent organic group, and at least two of R¹¹ to R¹³ are -R¹⁴OCOCR¹⁵=CH₂, R¹⁴ is a divalent organic group having 2 to 8 carbons atoms, R¹⁵ is a hydrogen atom or a methyl group).
[6] The radiation-curable composition according to any one of [1] to [5], a cured product of which having a thickness of 200 µm has a light transmission of 70 % or higher at a wavelength of 550 nm.
[7] The radiation-curable composition according to any one of [1] to [6], which is for use to join a PVA-formed body composed of a polyvinyl alcohol resin having a structure represented by the following formula (5) and an adherend made of a material which is similar or dissimilar to the material of the PVA-formed body. 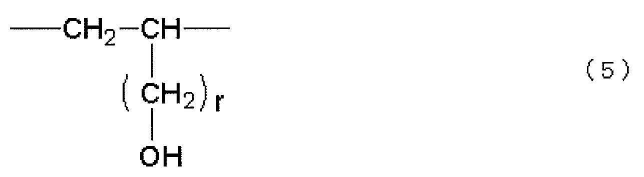 (In the formula, r is an integer of 0 to 4.)
[8] A composite formed by laminating an adherend on a PVA-formed body composed of a polyvinyl alcohol resin having a structure represented by the following formula (5) via an adhesive layer, the adherend being made of a material which is similar or dissimilar to the material of the PVA-formed body, wherein the adhesive layer is composed of a cured product of the radiation-curable composition according to any one of [1] to [7]. 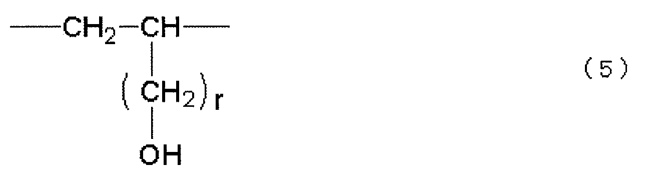 (In the formula, r is an integer of 0 to 4.)
[9] The composite according to [8], wherein the adherendmade of a material which is similar or dissimilar to the material of the PVA-formed body is a cyclic olefin resin film.
[10] A method for manufacturing the composite according to [8] or [9], comprising a step of laminating the adherend made of a material which is similar or dissimilar to the material of the PVA-formed body on the PVA-formed body via the radiation-curable composition and a step of curing the radiation-curable composition by irradiating radiation to obtain the composite.

The radiation-curable composition of the present invention comprises particular components, therefore the composition is useful for bonding the PVA-formed body and the adherend made of a material which is similar or dissimilar to the material of the PVA-formed body. Especially, even if a cyclic olefin resin film is used as the adherend, it is possible to obtain a good adhesive strength, and in this case, it is also possible to obtain both of an excellent gas barrier property and a low moisture permeability (i.e. low water permeability).

The composite of the present invention includes the adhesive layer which is composed of a curedproduct of the radiation-curable composition comprising particular components, therefore the composite is excellent in cutting resistance (i.e. no peel-off is observed in the adhesive layer when being cut), resistance against heat and humidity, and adhesion property between the adherend and the adhesive layer, and so on.

Furthermore, by means of the method for manufacturing the composite of the present invention, it is possible to form the composite (for example, a gas barrier film which is a laminated film) only by laminating the adherend on the PVA-formed body via the radiation-curable composition and irradiating the radiation-curable composition to cure the composition, thus improving manufacturing efficiency of the composite.

### BRIEF DESCRIPTION OF THE DRAWINGS

Fig. 1 is a cross-sectional view illustrating an example of a composite of the present invention;
Fig. 2 is a flowchart showing an example of a method for manufacturing a composite of the present invention.

### BEST MODE FOR CARRYING OUT THE INVENTION

The radiation-curable composition of the present invention will now be described in detail.

The radiation-curable composition of the present invention comprises the following components (A) to (C) and other optional components.

### [Component (A)]

Component (A) constituting the radiation-curable composition is a cycloaliphatic epoxy compound having at lease one cycloaliphatic epoxy group in one molecule. As examples of the component (A), (A1) a compound having at least two cycloaliphatic epoxy groups in one molecule and (A2) a compound having one cycloaliphatic epoxy group in one molecule can be given. In the present invention, either the component (A1) or the component (A2) can be used alone, or both of those can be used in combination as the component (A).

When the component (A) comprises 50 mass percent or more of the component (A1) (i. e. a compound having at least two cycloaliphatic epoxy groups in one molecule), curing speed and mechanical strength can be more improved. When the component (A) comprises the component (A2), curability (i.e. curing speed) of the radiation-curable composition can be improved and the viscosity of the composition can be decreased.

Examples of the cycloaliphatic epoxy compound used as the component (A1) include 3,4-epoxycyclohexylmethyl-3',4'-epoxycyclohexane carboxylate, 2-(3,4-epoxycyclohexyl-5,5-spiro-3,4-epoxy) cyclohexane-metha-dioxane, bis(3,4-epoxycyclohexylmethyl)adipate, bis(3,4-epoxy-6-methylcyclohexylmethyl)adipate, 3,4-epoxy-6-methylcyclohexyl-3',4'-epoxy-6'-methylcyclohexane carboxylate, ε-caprolactone-modified 3,4-epoxycyclohexylmethyl-3',4'-epoxycyclohexane carboxylate, trimethylcaprolactone-modified 3,4-epoxycyclohexylmethyl-3',4'-epoxycyclohexane carboxylate, β-methyl-δ-valerolactone-modified 3,4-epoxycyclohexylmethyl-3',4'-epoxycyclohexane carboxylate, methylenebis(3,4-epoxycyclohexane), di(3,4-epoxycyclohexylmethyl) ether of ethylene glycol, ethylenebis(3,4-epoxycyclohexane carboxylate), dioctyl epoxycyclohexahydrophthalate, di-2-ethylhexyl epoxycyclohexahydrophthalate, and the like.

Among the cycloaliphatic epoxy compounds, 3,4-epoxycyclohexylmethyl-3',4'-epoxycyclohexane carboxylate, bis(3,4-epoxycyclohexylmethyl)adipate, ε-caprolactone-modified 3,4-epoxycyclohexylmethyl-3',4'-epoxycyclohexane carboxylate, trimethylcaprolactone-modified 3,4-epoxycyclohexylmethyl-3',4'-epoxycyclohexane carboxylate, and β-methyl-δ-valerolactone-modified 3,4-epoxycyclohexylmethyl-3',4'-epoxycyclohexane carboxylate are preferred, and 3,4-epoxycyclohexylmethyl-3',4'-epoxycyclohexane carboxylate and bis(3,4-epoxycyclohexylmethyl)adipate are more preferred.

Examples of commercially available products of the compound include CELLOXIDE 2021,CELLOXIDE2021P,CELLOXIDE2081,CELLOXIDE2083, CELLOXIDE 2085, EPOLEAD GT-300, EPOLEAD GT-301, EPOLEAD GT-302, EPOLEAD GT-400, EPOLEAD 401, EPOLEAD 403 (manufactured by DAICEL CHEMICAL INDUSTRIES, LTD.); KRM2199 (manufactured by ADEKA CORPORATION); and the like.

Preferred example of the component (A2) includes a compound (i.e. a cycloaliphatic diepoxy compound) represented by the following formula (1). 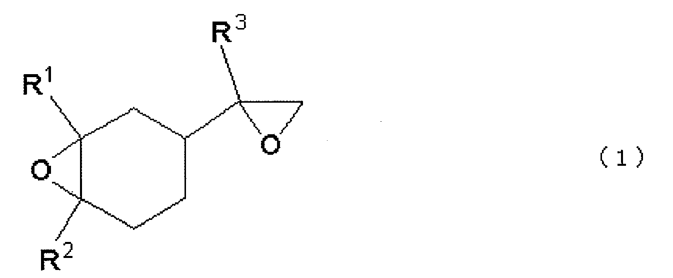 (In the formula, R¹, R², and R³ are each independently a hydrogen atom or a methyl group.)

Examples of the compound represented by the formula (1) include 1,2:8,9-diepoxy limonene, and the like. Examples of commercially available products of the compound include CELLOXIDE 3000 (manufactured by DAICEL CHEMICAL INDUSTRIES, LTD.); and the like.

The radiation-curable composition of the present invention includes the component (A1) and/or the component (A2) as the component (A).

In case that the radiation-curable composition of the present invention includes the component (A1), the radiation-curable composition includes the component (A1) in an amount of 20 to 80 mass percent, preferably of 25 to 78 mass percent, more preferably of 30 to 75 mass percent, wherein the total amount of the composition (the total amount except an organic solvent when the composition contains an organic solvent) is equal to 100 mass percent. When the amount is less than 20 mass percent, the adhesive layer is apt to exhibit insufficient mechanical strength and resistance against heat and humidity. When the amount excels 80 mass percent, the adhesive layer formed by curing the radiation-curable composition is apt to undergo larger deformation such as curvature. When a compound other than the polycarbonate diol represented by the following formula (2) (for example, polyester diol) is used as component (B) as described later, the component (A1) is included in an amount preferably of 30 to 70 mass percent, especially preferably of 30 to 60 mass percent.

In case that the radiation-curable composition of the present invention includes the component (A2), the radiation-curable composition includes the component (A2) in an amount preferably of 3 to 90masspercent, more preferably of 5 to 80 mass percent, most preferably of 7 to 70 mass percent, wherein the total amount of the composition (the total amount except an organic solvent when the composition contains an organic solvent) is equal to 100 mass percent. When the amount is less than 3 mass percent, the curing property immediately after irradiationmaybe insufficient. When the amount excels 90 mass percent, the adhesion strength to the PVA-formed body may be decreased.

### [Component (B)]

Component (B) constituting the radiation-curable composition is a compound having at least one hydroxyl group and a number average molecular weight of 500 or higher.

The number of hydroxyl group included in the component (B) (i.e. in one molecule) is one or more, preferably one to four.

The component (B) has a number average molecular weight of 500 or higher, preferably of 1, 000 or higher. The upper limit of the number average molecular weight is, but not limited to, preferably 20,000, more preferably 10,000 in view of avoiding excess increase in the viscosity of the composition. When the number average molecular weight is less than 500, the cutting resistance cannot be sufficiently improved.

The number average molecular weight of the component (B) is measured according to ASTM D2503 (specifically, a number average molecular weight in terms of polystyrene using HPC-8220GPC (manufactured by TOSOH CORPORATION), each two sets of the columns of TFK gel G4000HXL, G3000HXL, and G2000HXL, and tetrahydrofuran as a developing solvent at a flow rate of 1 cc/min and 40 °C.)

By using the component (B), the laminated film can exhibit excellent cutting resistance.

As preferred examples of a compound used as the component (B), polycarbonate diol, polycaprolactone diol, polyether diol, polyester diol, other polyol, and the like can be given.

Examples of the polycarbonate diol include polycarbonate of polytetrahydrofuran, polycarbonate of 1,6-hexanediol, and the like. Of these, a polycarbonate diol represented by the following general formula (2) is preferably used. When such polycarbonate diol is used, it is possible to provide a cured product of the adhesive layer to flexibility and film strength, and to satisfy both of cutting resistance and higher adhesive strength (peel strength).

HO- (R⁴-O-CO-O)ₘ-(R⁵-O-CO-O)ₙ-R⁶-OH (2)

(In the formula, R⁴ and R⁵ are each independently a divalent hydrocarbon group having 2 to 12 carbon atoms, R⁶ is the same as R⁴ or R⁵. m is 2 to 150, n is 0 to 150, and m+n is 2 to 200.)

Examples of a method for manufacturing the polycarbonate diol represented by the formula (2) include, but are not limited to, known methods such as an ester exchange reaction between a diol compound and a carbonate compound and a polycondensation reaction of a diol compound and phosgene. Examples of the diol compound used in manufacturing the polycarbonate diol include 1,4-butanediol, 1,6-hexanediol, 3-methyl-1,5-pentanediol, 1,9-nonanediol, 2-methyl-1,8-octanediol, and the like. In addition, a polycarbonate diol containing an aliphatic hydrocarbon group having 6 carbon atoms such as 1,6-hexanediol and 3-methyl-1,5-pentanediol is preferred in view of obtaining moderate cutting resistance and peel strength.

Examples of commercially available products of the polycarbonate diol include DN-980, 981, 982, 983 (manufactured by NIPPON POLYURETHANE INDUSTRY CO., LTD.); PC-8000 (manufactured by PPG); PC-THF-CD (manufactured by BASF) ; KURARAY POLYOL C-590, C-1090, C-2050, C-2090, C-3090, C-2065N, C-2015N (manufactured by KURARAY CO., LTD.); PLACCEL CD CD210PL, PLACCEL CD CD220PL (manufactured by DAICEL CHEMICAL INDUSTRIES, LTD.); and the like.

An Example of the polycaprolactone diol includes a polycaprolactone diol obtained by reacting ε-caprolactone and a diol, and the like. Examples of the diol used here include ethylene glycol, polyethylene glycol, propylene glycol, polypropylene glycol, tetramethylene glycol, polytetramethylene glycol, 1,2-polybutylene glycol, 1,6-hexanediol, neopentyl glycol, 1,4-cyclohexanedimethanol, 1,4-butanediol, and the like. Examples of commercially available products of the polycaprolactone diol include PLACCEL 205, 205H, 205AL, 212, 212AL, 220, 220AL (manufactured by DAICEL CHEMICAL INDUSTRIES, LTD.); and the like.

Preferred examples of the polyether diol include aliphatic polyether diols such as polyethylene glycol, polypropylene glycol, polytetramethylene glycol, polyhexamethylene glycol, polyheptamethylene glycol, polydecamethylene glycol, and the like. Examples of commercially available products of the polyether diol include PEG #600, #1000, #1500, #1540, #4000 (manufacturedbyLionCorporation) ; EXCENOL 720, 1020, 2020, 3020, 510, PREMINOL PPG4000 (manufactured by ASAHI GLASS CO., LTD); and the like.

As the polyester diol, a copolymer of an aliphatic diol compound and an aliphatic dicarboxylic acid is preferred. Examples of the aliphatic diol compound include 1,4-butanediol, 1,6-hexanediol, 1,8-octanediol, 1,9-nonanediol, 2-methyl-1,8-octanediol, 3-methyl-1,5-pentanediol, and the like. Examples of the aliphatic dicarboxylic acid include malonic acid, succinic acid, glutaric acid, adipic acid, sebacic acid, and the like. The aliphatic diol compounds can be used alone or in combination of two or more. Also, the aliphatic dicarboxylic acid compounds can be used alone or in combination of two or more. Examples of commercially available products of the polyester diol include KURARAYPOLYOLN-2010, O-2010, P-510, P-1010, P-1050, P-2010, P-2050, P-3010, P-3050 (manufactured by KURARAY CO., LTD.); and the like.

Examples of other polyol include polyether polyols obtained by modifying a polyhydric alcohol of trivalent or more such as trimethylolpropane, glycerine, pentaerythritol, sorbitol, sucrose, and quodorole with a cyclic ether compound such as ethylene oxide (EO), propylene oxide (PO), butylene oxide, and tetrahydrofuran.

Examples of such compound include EO-modified trimethylol propane, PO-modifiedtrimethylolpropane, tetrahydrofuran-modifiedtrimethylol propane, EO-modified glycerine, PO-modified glycerine, tetrahydrofuran-modified glycerine, EO-modified pentaerythritol, PO-modified pentaerythritol, tetrahydrofuran-modified pentaerythritol, EO-modified sorbitol, PO-modified sorbitol, EO-modified sucrose, PO-modified sucrose, EO-modified sucrose, EO-modified quodorole, and the like. Of these, EO-modified trimethylol propane, PO-modified trimethylol propane, PO-modified glycerine, and PO-modified sorbitol are preferred.

Examples of commercially available products of the compound include SANNIX TP-700, SANNIX GP-1000, SANNIX SP-750, SANNIX GP-600 (manufactured by Sanyo Chemical industries, Ltd.); and the like.

Moreover, as preferred example of the polyol used as the component (B), a polymer of unsaturated compound having a hydroxyl group can be given. Examples of the unsaturated compound having a hydroxyl group include (meth)acrylate having a hydroxyl group, specifically, 2-hydroxyethyl (meth)acrylate, 2-hydroxypropyl (meth)acrylate, 2-hydroxybutyl (meth)acrylate, 2-hydroxy-3-phenyloxypropyl (meth)acrylate, 1,4-butanediol mono(meth)acrylate, 2-hydroxyalkyl (meth)acryloyl phosphate, 4-hydroxycyclohexyl (meth)acrylate, 1,6-hexanediol mono(meth)acrylate, neopentyl glycol mono(meth)acrylate, trimethylolpropane di(meth)acrylate, trimethylolethane di(meth)acrylate, pentaerythritol tri(meth)acrylate, dipentaerythritol penta (meth) acrylate, and the like. Furthermore, a compound obtained by adding reaction of a glycidyl group-containing compound such as alkyl glycidyl ether, allyl glycidyl ether, and glycidyl (meth) acrylate, and (meth) acrylic acid canbe given.

The radiation-curable composition includes the component (B) in an amount of 3 to 50 mass percent, preferably of 5 to 45 mass percent, more preferably of 7 to 40 mass percent, and especially preferably of 7 to 30 mass percent, wherein the total amount of the composition (the total amount except an organic solvent when the composition contains an organic solvent) is equal to 100 mass percent. When the amount is less than 3 mass percent, the cutting resistance of the adhesive layer is decreased. On the other hand, when the amount excels 50 mass percent, the coating property becomes poor due to increased viscosity of the radiation-curable composition, and the adhesion strength between the adhesive layer and the adherend is decreased. It should be noted that the component (B) is included in an amount preferably of 7 to 20 mass percent, especially preferably of 7 to 15 mass percent when the compound other than the compound represented by the formula (2) (for example, polyester diol and the like) is used.

### [Component (C)]

Component (C) constituting the radiation-curable composition is a photoacid generator. The photoacid generator is a photo-cationic polymerization initiator which emits a Lewis acid upon irradiation with light.

Examples of the photoacid generator include onium salts represented by the following formula (3). The onium salts substantially adsorb a light having a wavelength of shorter than 400 nm.

[R⁷ₐ R⁸_{b} R⁹_{c} R¹⁰ _{d}Z]^{P+} [M X_{q+p}]^{p-} (3)

(In the formula, the cation is an onium ion; Z is S, Se, Te, P, As, Sb, Bi, O, I, Br, Cl, or -N≡N; R⁷, R⁸, R⁹, and R¹⁰ are the same or different organic groups to one another; a, b, c, and d are independently an integer from 0 to 3; and (a + b + c + d - p) is equal to the valence of Z. M is a metal or a metalloid constituting the center atom of the halogenated complex [M X_{q+p}], such as B, P, As, Sb, Fe, Sn, Bi, Al, Ca, In, Ti, Zn, Sc, V, Cr, Mn, or Co; X is a halogen atom such as F, Cl, Br, or the like; p is a net electric charge of the halogenated complex ion; q is the atomic valence of M.)

Examples of the onium ion in the above formula (3) include diaryliodonium such as diphenyliodonium, 4-methoxydiphenyliodonium, bis(4-methylphenyl)iodonium, bis(4-tert-butylphenyl)iodonium and bis(dodecylphenyl)iodonium; triarylsulfonium such as triphenylsulfonium and diphenyl-4-thiophenoxyphenylsulfonium; bis[4-(diphenylsulfonio)-phenyl]sulfide, bis[4-(di(4-(2-hydroxyethyl)phenyl)sulfonio)-phenyl]sulfide, η⁵-2,4-(cyclopentadieneyl)[1,2,3,4,5,6-η]-(methylethyl)-benzene]-iron(1+), and the like.

Examples of the anion [M X_{q+p}] in the above formula (3) include tetrafluoroborate (B F₄⁻), hexafluorophosphate (P F₆⁻), hexafluoroantimonate (Sb F₆⁻), hexafluoroarsenate (As F₆⁻), hexachloroantimonate (Sb Cl₆⁻), and the like.

Furthermore, onium salts having an anion represented by the general formula [M X_{q} (OH)⁻] can be used. Also, onium salts having other anion such as perchlorate ion (Cl O₄⁻), trifluoromethanesulfonate ion (C F₃ SO₃⁻), fluorosulfonate ion (F SO₃⁻), toluenesulfonate ion, trinitrobenzenesulfonate anion, trinitrotoluenesulfonate anion, and the like can be used.

Examples of the onium salts used as the component (C) include aromatic halonium salts described in Japanese Laid-Open Patent Publications S50-151996, S50-158680, and the like; VIA-group aromatic onium salts described in Japanese Laid-Open Patent Publications S50-151997, S52-30899, S56-55420, S55-125105, and the like; VA-group aromatic onium salts described in Japanese Laid-Open Patent Publications S50-158698, and the like; oxosulfoxonium salts described in Japanese Laid-Open Patent Publications S56-8428, S56-149402, S57-192429, and the like; aromatic diazonium salts described in Japanese Laid-Open Patent Publications S49-17040, and the like; thiopyrylium salts described in US Patent 4,139,655; and the like. Iron/allene complex, aluminium complex/photodegradable silicide initiator can be also used.

As the photoacid generator used as the component (C), aromatic onium salts such as diaryliodonium salt and triarylsulfonium salt are preferred, and triarylsulfonium salt is more preferred.

Examples of commercially available products of (C) photoacid generator include UVI-6950, UVI-6970, UVI-6974, UVI-6990 (manufactured by Union Carbide Corporation); ADEKA OPTOMER SP-150, SP-151, SP-170, SP-172 (manufactured by ADEKA CORPORATION); Irgacure 261 (manufactured by Ciba Specialty Chemicals); CI-2481, CI-2624, CI-2639, CI-2064 (manufactured by NIPPON SODA CO., LTD.); CD-1010, CD-1011, CD-1012 (manufactured by Sartomer Company, Inc.); DTS-102, DTS-103, NAT-103, NDS-103, TPS-103, MDS-103, MPI-103, BBI-103 (manufactured by Midori Kagaku Co., Ltd.); PCI-061T, PCI-062T, PCI-020T, PCI-022T (manufactured by NIPPONKAYAKU CO., LTD.); CPI-110A, CPI-101A (manufactured by SAN-APRO Ltd.); and the like. Of these, UVI-6970, UVI-6974, ADEKAOPTOMERSP-170, SP-172, CD-1012, MPI-103, CPI-110A, and CPI-101A are especially preferred, because the composition including these products can have higher photo-curing sensitivity. The above photoacid generators can be used alone or in combination of two or more.

Additionally, a sensitizer can be used together to promote acid generation by the photoacid generator. Examples of the sensitizer include dihydroxybenzene, trihydroxybenzene, hydroxyacetophenone, dihydroxydiphenylmethane, and the like.

The radiation-curable composition of the present invention includes the component (C) in an amount preferably of 0.1 to 10 mass percent, more preferably of 0.2 to 5 mass percent, especially preferably of 0.3 to 3 mass percent, wherein the total amount of the composition (the total amount except an organic solvent when the composition contains an organic solvent) is equal to 100 mass percent. When the amount is less than 0.1 mass percent, the photo-curing property of the radiation-curable composition becomes poor, resulting in insufficient mechanical strength of the adhesive layer. On the other hand, when the amount excels 10 mass percent, the photoacid generator is likely to have adverse effect on the long-term property of the adhesive layer.

### [Component (D)]

The radiation-curable composition of the present invention can additionally include an isocyanuric acid derivative having a polymerizable unsaturated group represented by the following formula (4) (component (D)). When the component (D) is included, the curing property (i.e. curing speed) of the radiation-curable composition can be improved. 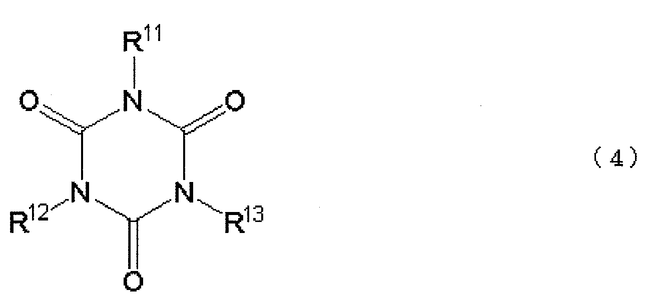 (In the formula, R¹¹, R¹², and R¹³ are each independently a monovalent organic group, at least two of R¹¹ to R¹³ are -R¹⁴OCOCR¹⁵=CH₂, R¹⁴ is a divalent organic group having 2 to 8 carbon atoms, R¹⁵ is a hydrogen atom or methyl group.)

The component (D) preferably has two or more polymerizable unsaturated groups in a molecule. The polymerizable unsaturated group is preferably, but is not limited to, (meth)acrylate group. The component (D) having two or more polymerizable unsaturated groups increases crosslink density, and it is possible to lessen an decrease in hardness which is led by adding this.

Examples of the component (D) which can be used in the present invention include tris[2-(meth)acryloyloxyethyl] isocyanurate, bis[2-(meth)acryloyloxyethyl)(2-hydroxyethyl) isocyanurate, bis[2-(meth)acryloyloxyethyl] isocyanurate; (meth)acrylate of ethylene oxide (EO) adduct, propylene oxide adduct, or caprolactamadduct of precursor alcohol of these; and the like. Of these, tris [ 2-(meth)acryloyloxyethyl] isocyanurate and bis[2-(meth)acryloyloxyethyl)(2-hydroxyethyl) isocyanurate are especially preferred.

Examples of commercially available products of the component (D) include ARONIX M-215, M-313, M-315, M-325, M-326, M-327 (manufactured by TOAGOSEI CO., LTD.); SR-368 (manufactured by Sartomer Company, Inc.); and the like. The above compounds can be used alone or in combination of two or more.

In case that the radiation-curable composition of the present invention includes the component (D), the component (D) is included in an amount preferably of 3 to 40 mass percent, more preferably of 5 to 35 mass percent, especially preferably of 7 to 30 mass percent, wherein the total amount of the composition (the total amount except an organic solvent when the composition contains an organic solvent) is equal to 100 mass percent. When the amount is less 3 mass percent, the curing property immediately after irradiation may be insufficient. When the amount excels 40 mass percent, the adhesion strength to PVA-formed body may be decreased.

### [Component (E)]

The radiation-curable composition of the present invention can additionally include an aliphatic epoxy compound (component (E)). The aliphatic epoxy compound (i.e. component (E)) is an optional component added to control the mechanical strength of the adhesive layer, and the like.

Examples of the aliphatic epoxy compound include 1, 4-butanediol diglycidyl ether, 1,6-hexanediol diglycidyl ether, neopentyl glycol diglycidyl ether, trimethylolpropane triglycidyl ether, polyethylene glycol diglycidyl ether, glycerine triglycidyl ether, polypropylene glycol diglycidyl ether; polyglycidyl ether of polyetherpolyol which is obtained by adding one or more alkylene oxide to aliphatic polyhydric alcohol such as ethylene glycol, propylene glycol, and glycerine; diglycidylester of aliphatic long-chain dihydric acid; monoglycidyl ether of aliphatic fatty alcohol; glycidyl ester of higher fatty acid; epoxidized soybean oil; epoxy butyl stearate; epoxy octyl stearate; epoxidized flaxseed oil; epoxidized polybutadiene; and the like.

In case that the radiation-curable composition of the present invention includes the component (E), the component (E) is included in an amount preferably of 0 to 50 mass percent, more preferably of 0 to 45 mass percent, especially preferably of 0 to 40 mass percent, wherein the total amount of the composition (the total amount except an organic solvent when the composition contains an organic solvent) is equal to 100 mass percent. When the amount excels 50 mass percent, because the amount of (A) cycloaliphatic epoxy compound, which is an essential component, is decreased, the effect of the present invention cannot be obtained. In addition, when the compound other than the polycarbonatediol represented by the above formula (2) is used as the component (B), the component (E) is included in an amount preferably of 15 to 45 mass percent, especially preferably of 30 to 40 mass percent.

The radiation-curable composition of the present invention can include various additives as other optional component in so far as the object and the effect of the present invention are not impaired. Examples of the additives include a polymer or oligomer such as epoxy resin, polyamide, polyamideimide, polyurethane, polybutadiene, polychloroprene, poly ether, polyester, styrene-butadiene block copolymer, petroleum resin, xylene resin, ketone resin, cellulose resin, fluorine oligomer, silicone oligomer, polysulfide oligomer; polymerization inhibitor such as phenothiazine, 2,6-di-t-butyl-4-methylphenol; polymerization initiation aid; leveling agent; wetting agent; surfactant; plasticizer; UV absorber; silane coupling agent; inorganic filler; pigment; dye; and the like.

An example of component composition of the radiation-curable composition of the present invention is described below. The amount (mass percent) of each component below is based on the total amount of the radiation-curable composition (100 mass percent), however, the total amount excepts the amount of an organic solvent when the composition contains an organic solvent.

### [Component composition 1: In case that the component (A1) is included and the component (A2) is not included]

The component (A1) is included in an amount preferably of 20 to 80 mass percent, more preferably of 25 to 70 mass percent, especially preferably of 30 to 60 mass percent.

The component (B) is included in an amount preferably of 3 to 30 mass percent, more preferably of 5 to 20 mass percent, especially preferably of 7 to 15 mass percent.

The component (C) is included in an amount preferably of 0.1 to 10 mass percent, more preferably of 0.2 to 5 mass percent, especially preferably of 0.3 to 3 mass percent.

The component (E) is included in an amount preferably of 0 to 50 mass percent, more preferably of 15 to 45 mass percent, especially preferably of 30 to 40 mass percent.

When the amount of the component (A1) is less than 20 mass percent, the adhesive layer is apt to exhibit insufficient mechanical strength and resistance against heat and humidity. When the amount of the component (A1) excels 80 mass percent, the adhesive layer formed by curing the radiation-curable composition is apt to undergo larger deformation such as curvature.

When the amount of the component (B) is less than 3 mass percent, the cutting resistance of the adhesive layer is decreased. On the other hand, when the amount of the component (B) excels 30 mass percent, the coating property becomes poor due to increased viscosity of the radiation-curable composition, and the adhesion strength between the adhesive layer and the adherend is decreased.

When the amount of the component (C) is less than 0.1 mass percent, the photo-curing property of the radiation-curable composition becomes poor, and the adhesive layer cannot exhibit sufficient mechanical strength. On the other hand, when the amount of the component (C) excels 10 mass percent, the photoacid generator is likely to have adverse effect on the long-term property of the adhesive layer.

When the amount of the component (E) excels 50 mass percent, (A) cycloaliphatic epoxy compound, which is an essential component, is less included, and then, the effect of the present invention cannot be obtained.

### [Component composition 2: In case that the component (A1) is included or not included, and the component (A2) is included)

The component (A1) is included in an amount preferably of 20 to 80 mass percent, more preferably of 25 to 75 mass percent, especially preferably of 30 to 70 mass percent.

The component (A2) is included in an amount preferably of 3 to 90 mass percent, more preferably of 5 to 80 mass percent, especially preferably of 7 to 70 mass percent.

The component (B) is included in an amount preferably of 3 to 50 mass percent, more preferably of 5 to 45 mass percent, especially preferably of 7 to 40 mass percent.

The component (C) is included in an amount preferably of 0.1 to 10 mass percent, more preferably of 0.2 to 5 mass percent, especially preferably of 0.3 to 3 mass percent.

The component (E) is included in an amount preferably of 0 to 50 mass percent, more preferably of 0 to 45 mass percent, especially preferably of 0 to 40 mass percent.

The lower limits and the upper limits of the amounts of the components (A1), (B), (C), and (E) are determined in the same view as the above component composition 1.

When the amount of component (A2) is less than 3 mass percent, the curing property immediately after irradiation may be insufficient. When the amount of component (A2) excels 90 mass percent, the adhesion strength to the PVA-formed body may be decreased.

### [Component composition 3: In case that the component (A1) is included, and the component (B) is polycarbonate diol represented by the formula (2)]

The component (A1) is included in an amount preferably of 20 to 80 mass percent, more preferably of 25 to 78 mass percent, especially preferably of 30 to 75 mass percent.

The component (B) is included in an amount preferably of 3 to 30 mass percent, more preferably of 5 to 20 mass percent, especially preferably of 7 to 15 mass percent.

The component (C) is included in an amount preferably of 0.1 to 10 mass percent, more preferably of 0.2 to 5 mass percent, especially preferably of 0.3 to 3 mass percent.

The component (E) is included in an amount preferably of 0 to 50 mass percent, more preferably of 15 to 45 mass percent, especially preferably of 30 to 40 mass percent.

The lower limits and the upper limits of the amounts of the components (A1), (B), (C), and (E) are determined in the same view as the above component composition 1.

### [Component composition 4: In case that the component (A1) is included, and the component (D) is included.]

The component (A1) is included in an amount preferably of 20 to 80 mass percent, more preferably of 25 to 75 mass percent, especially preferably of 30 to 70 mass percent.

The component (B) is included in an amount preferably of 3 to 50 mass percent, more preferably of 5 to 45 mass percent, especially preferably of 7 to 40 mass percent.

The component (C) is included in an amount preferably of 0.1 to 10 mass percent, more preferably of 0.2 to 5 mass percent, especially preferably of 0.3 to 3 mass percent.

The component (D) is included in an amount preferably of 3 to 40 mass percent, more preferably of 5 to 35 mass percent, especially preferably of 7 to 30 mass percent.

The component (E) is included in an amount preferably of 0 to 50 mass percent, more preferably of 0 to 45 mass percent, especially preferably of 0 to 40 mass percent.

The lower limits and the upper limits of the amounts of the components (A1), (B), (C), and (E) are determined in the same view as the above component composition 1.

When the amount of the component (D) is less than 3 mass percent, the curing property immediately after irradiation may be insufficient. When the amount of the component (D) excels 40 mass percent, the adhesion strength to the PVA-formed body may be decreased.

The radiation-curable composition can be prepared by mixing uniformly the above components (A) to (C), and the optional component as required. The radiation-curable composition thus obtained has a viscosity generally of 2,000 mPa·s or less, preferably of 500 mPa· s or less, more preferably of 300 mPa·s or less at a coating temperature.

In addition, a solvent such as an organic solvent can be added to the radiation-curable composition as required. In the present invention, however, the radiation-curable composition preferably does not contain the solvent in view of keeping working surroundings and environmental burden, because the composition can be prepared without the solvent.

The cured product of the radiation-curable composition of the present invention has a light transmission at a wavelength of 550 nm preferably of 70 % or higher, more preferably of 80 % or higher, when the cured product is 200 µm thick.

Next, a composite of the present invention and a method for manufacturing the composite will be described with reference to drawings.

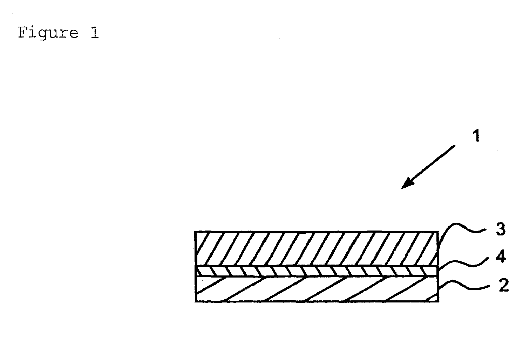

In Fig. 1, composite 1 is composed of PVA-formed body 2, adhesive layer 4 formed on the upper surface of PVA-formed body 2, and adherend 3 formed on the upper surface of adhesive layer 4.

### [PVA-formed body]

As the PVA-formed body, a formed body made of a polyvinyl alcohol resin having a structure represented by the following formula (5) can be given.

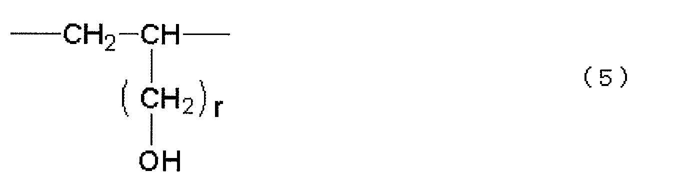

### (In the formula, r is an integer of 0 to 4.)

In the formula (5), r is an integer of 0 to 4, and is preferably 0.

Examples of suchpolyvinyl alcohol resin include polyvinylalcohol, ethylene-vinyl alcohol copolymer, and the like. In view of water resistance, ethylene-vinyl alcohol copolymer is preferred.

Examples of the polyvinyl alcohol include, but are not limited to, a partially saponified polyvinyl alcohol in which several tens percent of acetate groups remain; a completely saponified polyvinyl alcohol in which no acetate groups remain; and a modified polyvinyl alcohol in which hydroxyl groups are modified. Examples of commercially available products of the polyvinyl alcohol include RS-110 (saponification degree = 99 %, polymerization degree = 1,000) which is RS polymer manufactured by KURARAY CO., LTD.; KURARAY POVAL LM-20SO (saponification degree = 40 %, polymerization degree = 2,000) manufactured by said corporation; GOHSENOL NM-14 (saponification degree = 99 %, polymerization degree = 1,400) manufactured by Nippon Synthetic Chemical Industry Co., Ltd.; and the like.

For example, the polyvinyl alcohol can be obtained by saponifying a polymer of a fatty acid vinyl ester such as vinyl acetate, vinyl propionate, vinyl pivalate using an alkali catalyst, and the like.

The ethylene-vinyl alcohol copolymer is a saponified product of an ethylene-vinyl acetate copolymer, that is, obtained by saponifying an ethylene-vinyl acetate random copolymer. Examples of the ethylene-vinyl alcohol copolymer include, but are not limited to, a partially saponified product in which several tens mole percent of acetate groups remain, a completely saponified product in which a few mole percent of acetate groups or no acetate groups remain.

In view of the gas barrier property, the ethylene-vinyl alcohol copolymer has a saponification degree preferably of 80 mole percent or higher, more preferably of 90 mole percent or higher, especially preferably of 95 mole percent or higher. The ethylene-vinyl alcohol copolymer contains a repeating unit derived from ethylene (hereinafter, referred to as "ethylene content") in an amount generally of 0 to 50 mole percent, preferably of 20 to 45 mole percent.

Examples of commercially available products of the ethylene-vinyl alcohol copolymer include EVAL EP-F101 (ethylene content; 32 mole percent) manufactured by KURARAY CO., LTD.; SOARNOL D2908, D2935 (ethylene content; 29 mole percent), D2630 (ethylene content; 26 %), and A4412 (ethylene content; 44 %) manufactured by Nippon Synthetic Chemical Industry Co., Ltd.; and the like

The polyvinyl alcohol resin has a melt flow index of 1 to 50 g/10 min, preferably of 5 to 45 g/10 min under the conditions of 210 °C and a load of 21.168 N. When the melt flow index is less than 1 g/10 min, the gas barrier property may be decreased. On the other hand, when the melt flow index excels 50 g/10 min, the water resistance and solvent resistance may be decreased.

The polyvinyl alcohol resins can be used alone, or in combination of two or more.

The PVA-formed body can be obtained by forming the polyvinyl alcohol resin using a casting method and the like. The PVA-formed body may be obtained by bridged by boric acid, or by elongenated.

An example of a shape of the PVA-formed body is, but is not limited to, a film, and the like. In the present description, the word "film" involves not only thin films (for example, films having a thickness of under 1 mm) but also thick sheets (for example, sheets having a thickness of 1 to 5 mm).

The thickness of the PVA-formed body is, but is not limited to, determined to be, for example, 10 to 40 µm when the PVA-formed body is a polarizer.

### [Adhesive layer]

The adhesive layer is a cured product layer formed by curing the radiation-curable composition as mentioned above by radiation.

By forming the adhesive layer using the radiation-curable composition as mentioned above, the composite can have excellent cutting property, and excellent adhesion strength between the adherend and the adhesive layer even if the adherend is composed of a cycloolefin polymer.

The thickness of the adhesive layer is, but is not limited to, determined to be, for example, 0.5 to 3 µm.

### [Adherend]

As the adherend which is to be adhered to the above PVA-formed body, an adherend made of a material which is similar or dissimilar to the material of the PVA-formed body can be used.

As the adherend made of a material which is similar to the material of the above PVA-formed body, an adherend composed of the polyvinyl alcohol resin represented by the formula (5) can be given, as mentioned above. In this case, the adherend need not to have the same composition as the PVA-formed body has. For example, it is possible to use a film composed of polyvinyl alcohol as the PVA-formed body and a film composed of ethylene-vinyl alcohol copolymer as the adherend.

As the adherend made of a material which is dissimilar to the material of the above PVA-formed body, a film composed of a resin such as cyclic olefin resin (for example, norbornene resin) , acetate resin (for example, triacetyl cellulose) , polyester resin (for example, polyethylene terephthalate resin) , polyethersulfone resin, polycarbonate resin, polyamide resin, polyimide resin, polyolef in resin, and acryl resin can be used. Of these, a film composed of a cyclic olefin resin is preferred.

When a cyclic olefin resin film is used as the adherend which is to be adhered to the PVA-formed body, it is possible to satisfy both of excellent gas barrier property and low water permeability.

The thickness of the adherend is, but is not limited to, determined to be, for example, 15 to 100 µm. In addition, the adherend made of a material which is dissimilar to the material of the PVA-formed body can be variously surface treated before applying the radiation-curable composition.

### (Cyclic olefin resin film)

Preferred example of the cyclic olefin resin film is a film which is composed of a resin obtained by polymerizing monomers comprising at least one cyclic olefin compound and further hydrogenating as required.

As examples of the cyclic olefin compound, for example, cyclic olefin compounds represented by the following formula (6) can be given. 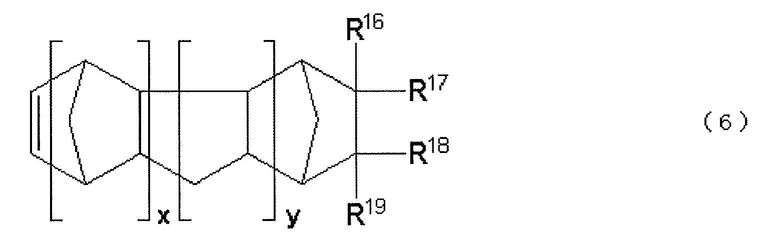 (In the formula, R¹⁶ to R¹⁹ are each independently a hydrogen atom; halogen atom; substituted or unsubstituted C1 to C15 hydrocarbon group which may contain linking group including oxygen, nitrogen, sulfur, or silicon; or other monovalent organic group. Alternatively, R¹⁶ and R¹⁷ or R¹⁸ and R¹⁹ may be linked to each other to form an alkylidene group, or R¹⁶ and R¹⁷, R¹⁸ and R¹⁹, or R¹⁷ and R¹⁸ may be linked to each other to form a carbocycle or heterocycle (these carbocycles or heterocycles may be monocyclic or be condensed to each other to form a polycyclic structure). The formed carbocycle or heterocycle may be an aromatic ring or nonaromatic ring. x is an integer of 0 or 1 to 3, y is 0 or 1. In case that x is 0, y is 0.)

Examples of the cyclic olefin compound represented by the formula (6) include, but are not limited to, the following compounds.
·bicyclo[2.2.1]hept-2-ene (norbornene)
·5-methyl-bicyclo[2.2.1]hept-2-ene
·5-ethyl-bicyclo[2.2.1]hept-2-ene
·5-cyclohexyl-bicyclo[2.2.1]hept-2-ene
·5-phenylbicyclo[2.2.1]hept-2-ene
·5-(4-biphenyl)-bicyclo[2.2.1]hept-2-ene
·5-methoxycarbonylbicyclo[2.2.1]hept-2-ene
·5-phenoxycarbonylbicyclo[2.2.1]hept-2-ene
·5-phenoxyethylcarbonylbicyclo[2.2.1]hept-2-ene
·5-phenylcarbonyloxybicyclo[2.2.1]hept-2-ene
·5-methyl-5-methoxycarbonylbicyclo[2.2.1]hept-2-ene
·5-methyl-5-phenoxycarbonylbicyclo[2.2.1]hept-2-ene
·5-methyl-5-phenoxyethylcarbonylbicyclo[2.2.1]hept-2-ene
·5-vinylbicyclo[2.2.1]hept-2-ene
·5-ethylidenebicyclo[2.2.1]hept-2-ene
·5,5-dimethyl-bicyclo[2.2.1]hept-2-ene
·5,6-dimethyl-bicyclo[2.2.1]hept-2-ene
·5-fluorobicyclo[2.2.1]hept-2-ene
·5-chlorobicyclo[2.2.1]hept-2-ene
·5-bromobicyclo[2.2.1]hept-2-ene
·5,6-difluorobicyclo[2.2.1]hept-2-ene
·5,6-dichlorobicyclo[2.2.1]hept-2-ene
·5,6-dibromobicyclo[2.2.1]hept-2-ene
·5-hydroxybicyclo[2.2.1]hept-2-ene
·5-hydroxyethyl-bicyclo[2.2.1]hept-2-ene
·5-cyanobicyclo[2.2.1]hept-2-ene
·5-aminobicyclo[2.2.1]hept-2-ene
·tricyclo[4.3.0.1^{2,5}]deca-3-ene
·tricyclo[4.4.0.1^{2,5}]undeca-3-ene
·7-methyl-tricyclo[4.3.0.1^{2,5}]deca-3-ene
·7-ethyl-tricyclo[4.3.0.1^{2,5}]deca-3-ene
·7-cyclohexyl-tricyclo[4.3.0.1^{2,5}]deca-3-ene
·7-phenyltricyclo[4.3.0.1^{2,5}]deca-3-ene
·7-(4-biphenyl)-tricyclo[4.3.0.1^{2,5}]deca-3-ene
·7,8-dimethyl-tricyclo[4.3.0.1^{2,5}]deca-3-ene
·7,8,9-trimethyl-tricyclo[4.3.0.1^{2,5}]deca-3-ene
·8-methyl-tricyclo[4.4.0.1^{2,5}]undeca-3-ene
·8-phenyltricyclo[4.4.0.1^{2,5}]undeca-3-ene
·7-fluorotricyclo[4.3.0.1^{2,5}]deca-3-ene
·7-chlorotricyclo[4.3.0.1^{2,5}]deca-3-ene
·7-bromotricyclo[4.3.0.1^{2,5}]deca-3-ene
·7,8-dichlorotricyclo[4.3.0.1^{2,5}]deca-3-ene
·7,8,9-trichlorotricyclo[4.3.0.1^{2,5}]deca-3-ene
·7-chloromethyl-tricyclo[4.3.0.1^{2,5}]deca-3-ene
·7-dichloromethyl-tricyclo[4.3.0.1^{2,5}]deca-3-ene
·7-trichloromethyl-tricyclo[4.3.0.1^{2,5}]deca-3-ene
·7-hydroxytricyclo[4.3.0.1^{2,5}] deca-3-ene
·7-cyanotricyclo[4.3.0.1^{2,5}]deca-3-ene
·7-aminotricyclo[4.3.0.1^{2,5}]deca-3-ene
·tetracyclo[4.4.0.1^{2,5}.1^{7,10}]dodeca-3-ene
·pentacyclo[7.4.0.1^{2,5}.1^{8,11}.0^{7,12}]pentadeca-3-ene
·hexacyclo[8.4.0.1^{2,5}.1^{7,14}.1^{9,12}.0^{8,13}]heptadeca-3-ene
·8-methyl-tetracyclo[4.4.0.1^{2,5}.1^{7,10}]dodeca-3-ene
·8-ethyl-tetracyclo[4.4.0.1^{2,5}.1^{7,10}]dodeca-3-ene
·8-cyclohexyl-tetracyclo[4.4.0.1^{2,5}.0^{7,10}]dodeca-3-ene
·8-phenyltetracyclo[4.4.0.1^{2,5}.1^{7,10}]dodeca-3-ene
·8-(4-biphenyl)-tetracyclo[4.4.0.1^{2,5}.1^{7,10}]dodeca-3-ene
·8-methoxycarbonyltetracyclo[4.4.0.1^{2,5}.1^{7,10}]dodeca-3-ene
·8-phenoxycarbonyltetracyclo[4.4.0.1^{2,5}.1^{7,10}]dodeca-3-ene
·8-phenoxyethylcarbonyltetracyclo[4.4.0.1^{2,5}.1^{7,10}]dodeca-3-ene
·8-phenylcarbonyloxytetracyclo[4.4.0.1^{2,5}.1^{7,10}]dodeca-3-ene
·8-methyl-8-methoxycarbonyltetracyclo[4.4.0.1^{2,5}.1^{7,10}]dodeca-3-ene
·8-methyl-8-phenoxycarbonyltetracyclo[4.4.0.1^{2,5}.1^{7,10}]dodeca-3-ene
·8-methyl-8-phenoxyethylcarbonyltetracyclo[4.4.0.1^{2,5}.1^{7,10}]dodeca -3-ene
·8-vinyltetracyclo[4.4.0.1^{2,5}.1^{7,10}]dodeca-3-ene
·8-ethylidenetetracyclo[4.4.0.1^{2,5}.1^{7,10}]dodeca-3-ene
·8,8-dimethyl-tetracyclo[4.4.0.1^{2,5}.1^{7,10}]dodeca-3-ene
·8,9-dimethyl-tetracyclo[4.4.0.1^{2,5}.1^{7,10}]dodeca-3-ene
·8-fluorotetracyclo[4.4.0.1^{2,5}.1^{7,10}]dodeca-3-ene
·8-chlorotetracyclo[4.4.0.1^{2,5}.1^{7,10}]dodeca-3-ene
·8-bromotetracyclo[4.4.0.1^{2,5}.1^{7,10}]dodeca-3-ene
·8,8-dichlorotetracyclo[4.4.0.1^{2,5}.1^{7,10}]dodeca-3-ene
·8,9-dichlorotetracyclo[4.4.0.1^{2,5}.1^{7,10}]dodeca-3-ene
·8,8,9,9-tetrachlorotetracyclo[4.4.0.1^{2,5}.1^{7,10}]dodeca-3-ene
·8-hydroxytetracyclo[4.4.0.1^{2,5}.1^{7,10}]dodeca-3-ene
·8-hydroxyethyl-tetracyclo[4.4.0.1^{2,5}.1^{7,10}]dodeca-3-ene
·8-methyl-8-hydroxyethyl-tetracyclo[4.4.0.1^{2,5}.1^{7,10}]dodeca-3-ene
·8-cyanotetracyclo[4.4.0.1^{2,5}.1^{7,10}]dodeca-3-ene
·8-aminotetracyclo[4.4.0.1^{2,5}.1^{7.10}]dodeca-3-ene

These cyclic olefin compounds can be used alone, or in combination of two or more.

The type and amount of the cyclic olefin compounds canbe determined arbitrarily according to the characteristics required for the obtained resin.

Of these, a compound which contains a structure having at least one atom selected from the group consisting of oxygen atom, nitrogen atom, sulfur atom, and silicon atom in the molecule (hereinafter, referred to as "polar structure") is preferred, because the film exhibits excellent adhesion property and contact property to other material. Especially, it is preferred to use a compound in which R¹⁶ and R¹⁸ each are a hydrogen atom or hydrocarbon group having 1 to 3 carbon atoms, preferably a hydrogen atom or methyl group, and one of R¹⁷ and R¹⁹ is a group having a polar structure and the other is a hydrogen atom or hydrocarbon group having 1 to 3 carbon atoms because the resin exhibits lowwater (i.e. moisture) adsorption property. Furthermore, a compound in which the group having a polar structure is a group represented by the following formula (7) is preferably used because the obtained resin easily strikes a balance between heat resistance and water (i.e. moisture) adsorption property.

-(CH₂)_{z} COOR²⁰ (7)

(In formula (7), R²⁰ is a substituted or unsubstituted hydrocarbon group having 1 to 15 carbon atoms, z is an integer of 0 or 1 to 10.)

The smaller z in the formula (7) is, the higher glass transition temperature the obtained hydrogenated product has, which lead to an improved heat resistance. Therefore, z is preferably an integer of 0 or 1 to 3. Moreover, a monomer in which z is 0 is preferred due to easiness of its synthesis. The larger carbon atoms R in the formula (7) has, the lower water (i.e. moisture) absorption property and the lower glass transition temperature the obtained hydrogenated polymer has. Therefore, R is preferably a hydrocarbon group having 1 to 10 carbon atoms and more preferably a hydrocarbon group having 1 to 6 carbon atoms in view of keeping heat resistance.

In addition, it is preferred that a C1 to C3 alkyl group, especially a methyl group binds to a carbon atom to which the group represented by the formula (7) is bonded in the above formula (6), in view of striking a balance between heat resistance and water (i.e. moisture) absorption property. Furthermore, a compound in which x is 0 or 1 and y is 0 in the formula (6) is preferably used due to its higher reactivity, higher polymer yield, higher heat resistance of the hydrogenated polymer, and its industrial availability.

The cyclic olefin resin can be obtained by polymerizing monomers further comprising other monomer which is copolymerizable with the above cyclic olefin compound.

Examples of the other copolymerizable monomer include a cyclic olefin such as cyclobutene, cyclopentene, cycloheptene, cyclooctene, cyclododecene; nonconjugatedcyclicpolyene such as 1,4-cyclooctadiene, dicyclopentadiene, cyclododecatriene; and the like.

The other copolymerizable monomers above can be used alone, or in combination of two or more.

The monomers including the above cyclic olefin compound can be polymerized by the known method using addition polymerization or metathesis ring-opening polymerization described in Japanese Laid-Open Patent Publications 2006-201736 and 2005-164632.

Also, the obtained polymer (copolymer) can be hydrogenated by the known method described in the publications above.

The hydrogenated polymer has a hydrogenation degree preferably of 50 percent or higher, more preferably of 70 percent or higher, even more preferably of 90 percent or higher, especially preferably of 98 percent or higher at 500 MHz using ¹H-NMR. The higher hydrogenated degree the polymer has, the more excellent the stability against heat orlightbecomes, which lead to a stable characteristics for long periods.

The cyclic olefinresinhas a intrinsic viscosity [η] ᵢₙₕpreferably of 0.2 to 2.0 dl/g, more preferably of 0.35 to 1.0 dl/g, especially preferably of 0.4 to 0.85 dl/g.

The cyclic olefin resin has a number average molecular weight (Mn) in terms of polystyrene measured by gel permeation chromatography (GPC) preferably of 5, 000 to 1,000,000, more preferably of 10,000 to 500, 000, especially preferably of 15, 000 to 250, 000. The cyclic olefin resin has a weight average molecular weight (Mw) preferably of 10, 000 to 2,000,000, more preferably of 20,000 to 1,000,000, especially preferably of 30,000 to 500,000.

The cyclic olefin resin has a glass transition temperature (Tg) preferably of 120 °C or higher, more preferably of 130 °C or higher, especially preferably of 150 °C or higher.

The cyclic olefin resin has a saturated water adsorption rate preferably of 1 mass percent or less, more preferably of 0.1 to 0.8 mass percent. When the saturated water adsorption rate excels 1 mass percent, a protecting film composed of the resin may have a problem with endurance, for example, it may be deformed by water adsorption over time depending on the use environment. It should be noted that the above saturated water adsorption rate is obtained by measuring an increased weight after immersed into water at 23 °C for 1 week according to ASTM D570.

Furthermore, in the present invention, additives such as an antioxidant, UV absorber can be added unless the effect of the present invention is not impaired.

Examples of the antioxidant include 2,6-di-t-butyl-4-methylphenol, 2,2'-dioxy3,3'-di-t-butyl-5,5'-dimethyldiphenylmethane, tetrakis[methylene-3-(3,5-di-t-butyl-4-hydroxyphenyl)propionate]me thane, and the like.

Examples of the UV absorber include 2,4-dihydroxybenzophenone, 2-hydroxy4-methoxybenzophenone, and the like.

### (Method for manufacturing cyclic olefin resin film)

As the method for manufacturing the cyclic olefin resin film, the known method described in Japanese Laid-Open Patent Publications 2006-201736, 2005-164632, and so on canbe employed. That is, the cyclic olefin resin film can be preferably manufactured by melting and molding directly the cyclic olefin resin or by dissolving the cyclic olefin resin with a solvent and casting it (i.e. casting method).

Next, the method for manufacturing the composite will be described.

The method for manufacturing the composite of the present invention comprises a step of laminating the adherend on the PVA-formed body via the radiation-curable composition, the adherend being made of a material which is similar or dissimilar to the material of the PVA-formed body, and a step of curing the radiation-curable composition by irradiating radiation (i.e. exposure to light).

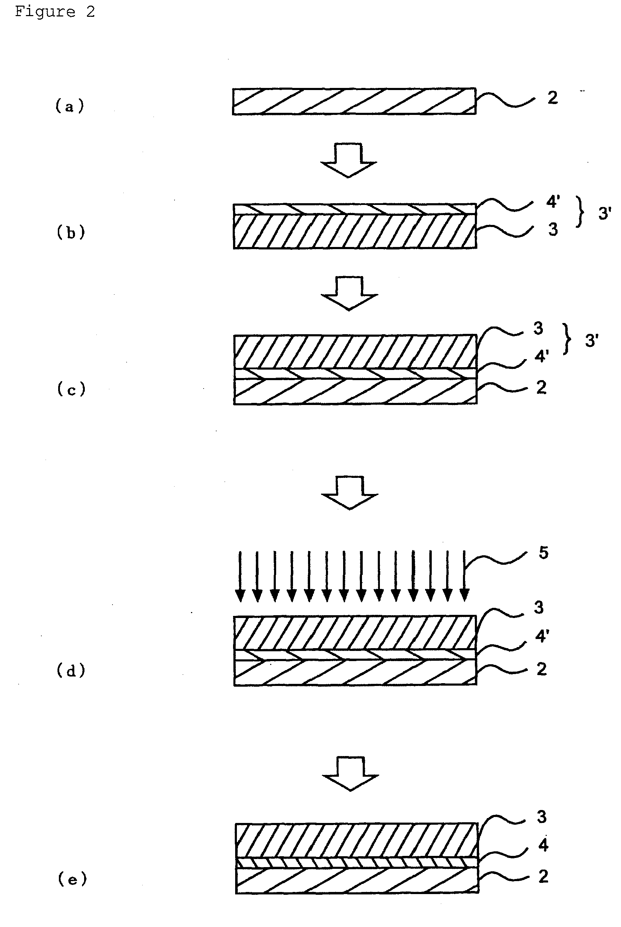

In Fig. 2, a method for manufacturing composite 1 comprises step (a) of preparing PVA-formed body 2, step (b) of applying the radiation-curable composition onto (one) surface of adherend 3 which itself is to become a main body of a protecting film, to obtain protecting film 3' having adhesion composition layer 4', step (c) of laminating protecting film 3' on the upper surface of PVA-formed body 2 so that adhesion composition layer 4' faces PVA-formed body 2, and step (d) of curing adhesion composition layer 4' by exposure to light.

The method will now be described by each step.

### [Step (a)]

Step (a) is a step of preparing PVA-formed body 2 (referring to Fig. 2 (a)).

### [Step (b)]

Step (b) is a step of applying the radiation-curable composition onto (one) surface of adherend 3 to obtain protecting film 3' having adhesion composition layer 4' (referring to Fig. 2 (b)).

Specifically, the radiation-curable composition is applied onto (one) surface of adherend 3, and dried as required, thus forming layer 4' composed of the composition. When the film made of a material which is dissimilar to the material of the PVA-formed body is to be adhered, the film is preferably corona-treated in its surface to which the composition is applied to improve adhesion strength.

Examples of an applying method of the radiation-curable composition include, but are not limited to, a die coating method, roll coating method, gravure coating method, spin coating method, and the like.

### [Step (c)]

Step (c) is a step of laminating protecting film 3' on the upper surface of PVA-formed body 2 so that adhesion composition layer 4' faces PVA-formed body 2 (referring to Fig. 2 (c)).

### [Step (d)]

Step (d) is a step of curing adhesion composition layer 4' by irradiating radiation 5 (referring to Fig. 2 (d)).

Specifically, radiation 5 is irradiated from a side or sides of PVA-formed body 2 and/or adherend 3. By this, adhesion composition layer 4' is cured to form adhesive layer 4. Consequently, PVA-formed body 2 and adherend 3 are joined with adhesive layer 4, thus obtaining composite 1 (referring to Fig. 2 (e)).

There are no particular restrictions on the irradiation dose of the light, but the target is preferably exposed to a light having a wavelength of 200 to 450 nm and an intensity of 1 to 500 mW/cm² at a light dose of 10 to 10,000 mJ/cm².

Radiation 5 can be irradiated not only from a side of adherend 3, but also from a side of PVA-formed body 2, or also from the both sides.

Examples of the radiation include visible light, UV rays, infrared rays, X rays, alpha rays, beta rays, gamma rays, and the like. Of these, UV rays are most preferred. It is preferable to use such irradiation apparatus as a high-pressure mercury vapor lamp, low-pressure mercury vapor lamp, metal halide lamp, excimer lamp, and the like.

The obtained composite is generally processed such as cutting and used as a polarizing plate, wrapping material or container for food, drink, medical products, cosmetics, and the like.

### [Examples]

The present invention will now be described more specifically with reference to the following examples.

### [Example 1]

### (Preparation of radiation-curable composition)

Components (A) to (C) and optional components were put into a vessel equipped with a stirrer at the ratio shown in Table 1, and were stirred for 4 hours to be uniform, and then left at rest for 24 hours after the stirring was stopped ,thus forming radiation-curable composition 1.

### (Manufacture of laminated film (composite))

The obtained radiation-curable composition 1 is applied onto a PVA film which is to be an adherend, using wire bar coater #3. The PVA film which is to be an adherend is laminated on another PVA film with trying not to cause a defection as bubbles. The films are fixed by four corners on a glass plate using a tape, and irradiated to be joined using a metal halide lamp (at an intensity of 220 mW/cm² and a light dose of 1,000 mJ/cm²), thus forming a laminated film, that is, PVA film/PVA film. It should be noted that the irradiation is carried out from a side of the PVA-formed body.

Also, the same process was performed using the following films, and the laminated films shown in Table 1 were manufactured.
PVA film: "KURARIA S" (trade name) manufactured by KURARAY CO., LTD.
EVAL film: "EVAL EF-F" (trade name) manufactured by KURARAY CO., LTD.
TAC film: "FUJI TAC 80D" (trade name) manufactured by FUJIFILM Corporation
ARTON film: "ARTON R5000" (trade name) manufactured by JSR Corporation ZEONOR film: "ZEONOR ZF14-100" (trade name) manufactured by ZEON CORPORATION.
APEL film: "APELAPL 6013T" (trade name) manufactured by Mitsui Chemicals, Inc. was dissolved in cyclopentane to obtain a resin solution having a resin concentration of 30 mass percent. The resin solution was applied onto a polyethylene terephthalate film using a bar coater, and left at rest for 1 hour, and then, dried at 80 °C for 12 hours, thus obtaining APEL film having a thickness of 72 µm.
TOPAS film: TOPAS film having a thickness of 75 µm was manufactured by the same process as APEL film, excepting that "TOPAS 5013" (trade name) manufactured by Polyplastics Co., Ltd. was dissolved in methylene chloride.

It should be noted that ARTON film/PVA film/ARTON film was irradiated from a side of the latter laminated film. Of the above films, films other than PVA film and EVAL film were subj ected to corona discharge treatment in their surfaces at 320 W·min/m² using a corona surface treating apparatus ("AGF-012" manufactured by KASUGA ELECTRIC WORKS LTD.), and joined within 1 hour after the surface treatment.

### (Evaluation)

The light transmission of a cured product of the obtained radiation-curable composition 1 and cutting resistance of each composite (laminated film) were evaluated by the following method.

### [Light transmission at 550 nm]

A PET film (thickness 188 µm, surface untreated) was fixed on a glass plate using an adhesive agent, and then, radiation-curable composition 1 was applied onto the PET film using an applicator of 15 mil gap to form a coating. The coating was irradiated using a metal halide lamp (at an intensity of 220 mW/cm² and a light dose of 1,000 mJ/cm²) to cure the composition constituting the coating, and left at rest at 23 °C and 50 % RH for 24 hours. The cured product was peeled off from the PET film. After confirming that the cured product has a thickness of 200 ± 5 µm, the light transmission at 550 nm thereof was measured using U-3410 spectrophotometer (manufactured by Hitachi, Ltd.) with air as a reference.

### [Cutting resistance]

The laminated film which had been left at rest at 23 °C and 50 %RH for 24 hours after irradiation was punched out using "Punch PN-2" (trade name) manufactured by KOKUYO Co., Ltd. and the obtained circular film piece was examined for appearance of peel-off, and then, evaluated according to the following definition.
⊚ : No peel-off was observed.
○ : A linear peel-off was observed in the edge of the piece.
× : A peel-off was evidently observed.

The results are shown in Table 1.

### [Examples 2 to 9 and Comparative Examples 1 to 3]

The properties were measured by the same process as Example 1, excepting that components were added at the ratio shown in Table 1. The results are shown in Table 1.

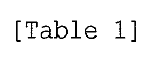

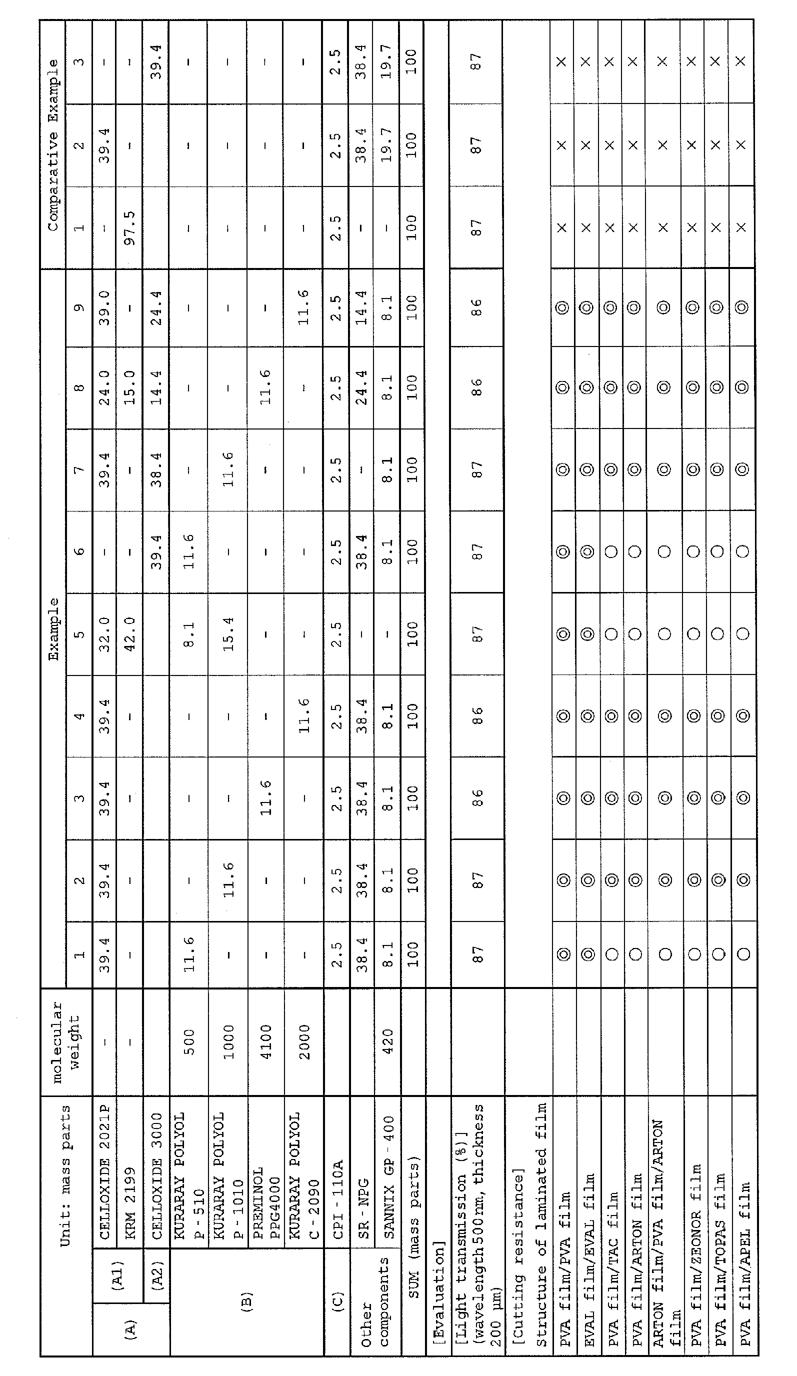

Compound names of components in Table 1 are as follows.

### [Component (A1)]

CELLOXIDE 2021P: 3,4-epoxycyclohexenylmethyl-3',4'-epoxycyclohexene carboxylate (manufactured by DAICEL CHEMICAL INDUSTRIES, LTD.)
KRM 2199: bis(3,4-epoxycyclohexylmethyl)adipate (manufactured by ADEKA CORPORATION)

### [Component (A2)]

CELLOXIDE 3000: 1,2:8,9-diepoxylimonene (manufactured by DAICEL CHEMICAL INDUSTRIES, LTD.)

### [Component (B)]

KURARAY POLYOL P-510: poly[(3-methyl-1,5-pentanediol)-alt-(adipic acid)] (manufactured by KURARAY CO., LTD.; number average molecular weight: 500)
KURARAY POLYOL P-1010: poly[(3-methyl-1,5-pentanediol)-alt-(adipic acid)] (manufactured by KURARAY CO., LTD.; number average molecular weight: 1,000)
PREMINOL PPG4000: polypropylene glycol (manufactured by ASAHI GLASS CO., LTD; number average molecular weight: 4,100)
KURARAY POLYOL C-2090: poly((3-methyl-1,5-pentanediol; 1, 6-hexanediol) carbonate) (manufactured by KURARAY CO., LTD.; number average molecular weight: 2,000)

### [Component (C)]

CPI-110A: diphenyl[4-(phenylthio)phenyl]sulfonium hexafluoroantimonate (manufactured by SAN-APRO Ltd.)

### [Other components]

SR-NPG: neopentyl glycol diglycidyl ether (manufactured by Sakamoto Yakuhin Kogyo Co., Ltd.)
SANNIX GP-400: polyoxypropylene glyceryl ether (manufactured by Sanyo Chemical industries, Ltd.; number average molecular weight 420)
[Examples 10 to 17, Comparative Examples 4 and 5, and Referential Examples 1 to 3]

Radiation-curable compositions and laminated films (composites) were obtained by the same process as Example 1, excepting that components were added at the ratio shown in Table 2.

The light transmission of the obtained cured product of radiation-curable composition and cutting resistance of laminated film were evaluated by the same method as Example 1, and furthermore, peel strength of the laminated film was evaluated by the following method.

### [Peel strength]

Peel strength of the laminated film was measured according to JIS K 6854-4 "Adhesives-Determination of peel strength of bonded assemblies-Part 4 : Floating-roller method". Specifically, the manufactured laminated film was fixed on a metal plate (stainless-steel, size: length 200 mm, width 25 mm, thickness 1.5 mm) using an adhesive double coated tape (ST-416P, manufactured by 3M). The longitudinal edge of the laminated film was divided using a cutter knife. According to the JIS method, a sample was attached to a floating-roller, the divided edge of the film sample was fixed to a grabber of a tensile testing machine, the floating-roller was elevated at a speed of 300 mm/min in the tensile testing machine, and average peel strength (unit N) of the peeled film was measured.

The respective cases that the average peel strength was 1.5 N or higher, that the laminated film was broken, and that the edge of the laminated film could not be divided were taken as "⊚", the case that the average peel strength was 0.8 N or more but less than 1.5 N was taken as "○", and the case that the average peel strength was less than 0.8 N was taken as "×".

The results were shown in Table 2.

Furthermore, results on light transmission, cutting resistance, and peel strength of the compositions obtained in the above Comparative Examples 1 and 2 were also shown in Table 2 as Comparative Examples 4 and 5 respectively, and results on the compositions obtained in the above Examples 1 to 3 were also shown in Table 2 as Referential Examples 1 to 3 respectively.

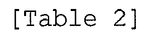

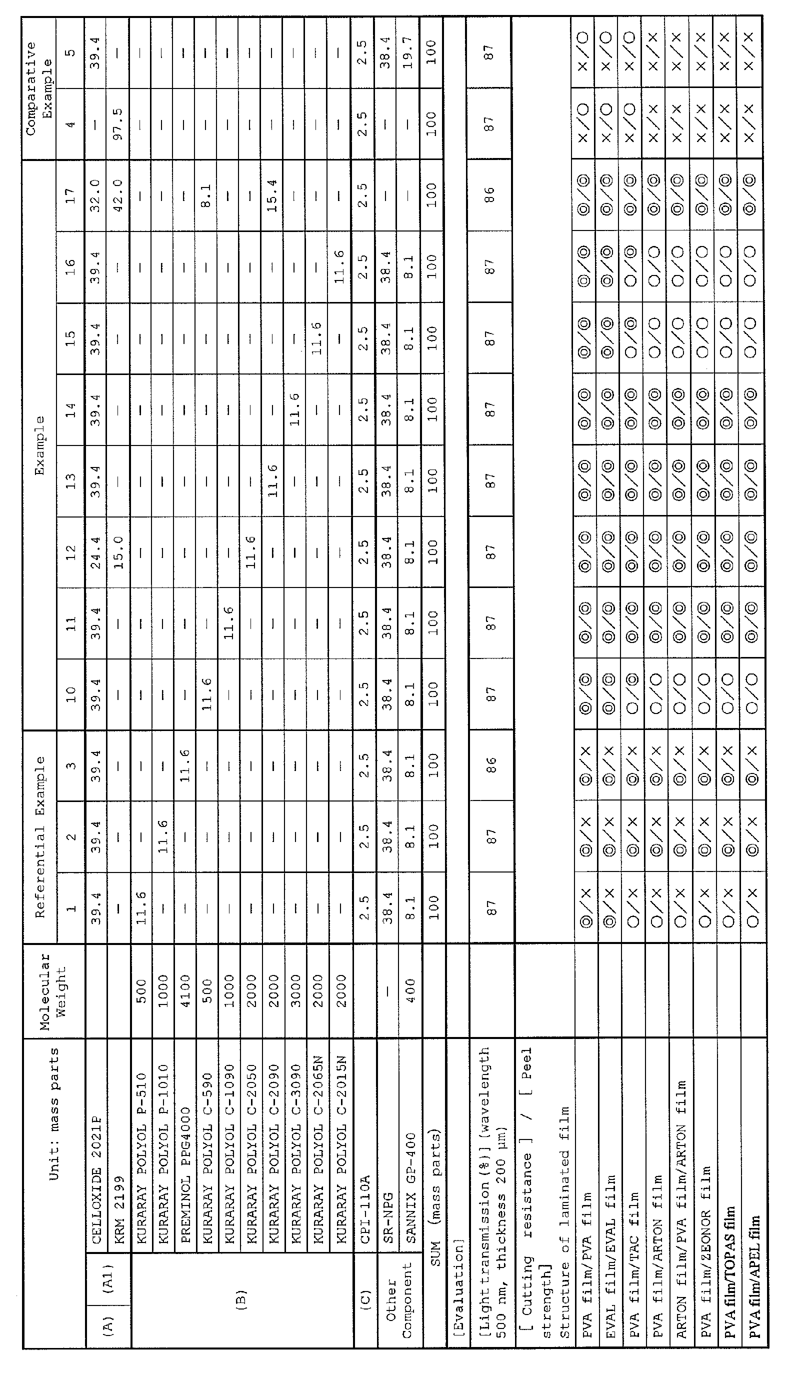

Compound names of components in Table 2 are as follows.
KURARAY POLYOL C-590: poly((3-methyl-1,5-pentanediol; 1, 6-hexanediol) carbonate) (manufactured by KURARAY CO., LTD .; number average molecular weight 500)
KURARAY POLYOL C-1090: poly((3-methyl-1,5-pentanediol; 1, 6-hexanediol) carbonate) (manufactured by KURARAY CO., LTD .; number average molecular weight 1,000)
KURARAY POLYOL C-2050: poly((3-methyl-1,5-pentanediol; 1, 6-hexanediol) carbonate) (manufactured by KURARAY CO., LTD .; number average molecular weight 2,000)
KURARAY POLYOL C-3090: poly((3-methyl-1,5-pentanediol; 1, 6-hexanediol) carbonate) (manufactured by KURARAY CO., LTD .; number average molecular weight 3,000)
KURARAY POLYOL C-2065N: poly((1,9-nonanediol; 2-methyl-1,8-octanediol)carbonate) (manufactured by KURARAY CO., LTD .; number average molecular weight 2,000)
KURARAY POLYOL C-2015N: poly((1,9-nonanediol; 2-methyl-1,8-octanediol)carbonate) (manufactured by KURARAY CO., LTD .; number average molecular weight 2,000)

The component (A1), KURARAY POLYOLP-510, P-1010, C-2090, PREMINOL PPG4000 used as the component (B) , the component (C) , andothercomponents are the same as in Table 1.

### [Examples 18 to 22, Comparative Examples 6 and 7, and Referential Example 4]

Radiation-curable compositions and laminated films (composites) were obtained by the same process as Example 1, excepting that components were added at the ratio shown in Table 3.

The light transmission of the cured product of the obtained radiation-curable composition and cutting resistance of the laminated film were evaluated by the same method as Example 1, and furthermore, initial cutting resistance of the laminated film was evaluated by the following method.

### [Initial cutting resistance]

The laminated film which had been left at rest at 23 °C and 50 %RH for 1 hour after irradiation was punched out using "Punch PN-2" (trade name) manufactured by KOKUYO Co., Ltd. and the obtained circular film piece was examined for appearance of peel-off, and then, evaluated according to the following definition.
⊚ : No peel-off was observed.
○ : A linear peel-off was observed in the edge of the piece.
× : A peel-off was evidently observed.

The results were shown in Table 3.

Furthermore, results on light transmission, cutting resistance, and initial cutting resistance of the compositions obtained in the above Comparative Examples 1 and 2 were also shown in Table 3 as Comparative Examples 6 and 7 respectively, and a result on the composition obtained in the above Example 2 was also shown in Table 3 as Referential Example 4.

**[Table 3]**

| Unit: mass parts | | | Molecular Weight | Referential Example | Example | | | | | Comparative Example | |
|---|---|---|---|---|---|---|---|---|---|---|---|
| | | | | 4 | 18 | 19 | 20 | 21 | 22 | 6 | 7 |
| (A) | (A1) | CELLOXIDE 2021P | | 39.4 | 32.5 | 32.5 | 32.5 | 32.5 | 32.0 | - | 39.4 |
| | | KRM 2199 | | - | - | - | - | - | 32.0 | 97.5 | - |
| (B) | | KURARAY POLYOL P - 510 | 500 | - | 10.0 | - | - | - | - | - | - |
| | | KURARAY POLYOL P - 1010 | 1000 | 11.6 | - | 10.0 | - | - | - | - | - |
| | | KURARAY POLYOL C - 2090 | 2000 | - | - | - | 10.0 | 10.0 | 15.4 | - | - |
| | | KURARAY POLYOL C - 590 | 500 | - | - | - | - | - | 6.1 | - | - |
| (C) | | CPI-110A | | 2.5 | 2.5 | 2.5 | 2.5 | 2.5 | 2.5 | 2.5 | 2.5 |
| (D) | | ARONIX M - 315 | | - | 12.0 | 12.0 | 12.0 | - | 10.0 | - | - |
| | | ARONIX M - 215 | | - | - | - | - | 12.0 | - | - | - |
| Other Component | | SR-NPG | | 38.4 | 33.0 | 33.0 | 33.0 | 33.0 | - | - | 38.4 |
| | | SANNIX GP - 400 | | 8.1 | 8.0 | 8.0 | 8.0 | 8.0 | - | - | 19.7 |
| | | Irgacure 184 | | - | 2.0 | 2.0 | 2.0 | 2.0 | 2.0 | - | - |
| | | Hitaloid 4861 | | - | - | - | - | - | - | - | - |
| | | KAYARAD DPHA | | - | - | - | - | - | - | - | - |
| SUM (mass parts) | | | | 100 | 100 | 100 | 100 | 100 | 100 | 100 | 100 |
| [Evaluation] | | | | | | | | | | | |
| [Light transmission (%)](wavelength 500 nm, thickness 200 µm) | | | | 87 | 87 | 87 | 87 | 87 | 87 | 87 | 87 |
| [Cutting resistance] esistance] / [Initial cutting resistance] Structure of laminated film | | | | | | | | | | | |
| PVA film/PVA film | | | | ⊚/× | ⊚/○ | ⊚/○ | ⊚/⊚ | ⊚/⊚ | ⊚/⊚ | ×/× | ×/× |
| EVAL film/EVAL film | | | | ⊚/× | ⊚/○ | ⊚/○ | ⊚/⊚ | ⊚/⊚ | ⊚/⊚ | ×/× | ×/× |
| PVA film/TAC film | | | | ⊚/× | ○/○ | ⊚/○ | ⊚/⊚ | ⊚/⊚ | ⊚/⊚ | ×/× | ×/× |
| PVA film/ARTON film | | | | ⊚/× | ○/○ | ⊚/○ | ⊚/⊚ | ⊚/⊚ | ⊚/⊚ | ×/× | ×/× |
| ARTON film/ PVA film/ARTON film | | | | ⊚/× | ○/○ | ⊚/○ | ⊚/⊚ | ⊚/⊚ | ⊚/⊚ | ×/× | ×/× |
| PVA film/ZEONOR film | | | | ⊚/× | ○/○ | ⊚/○ | ⊚/⊚ | ⊚/⊚ | ⊚/⊚ | ×/× | ×/× |
| PVA film/TOPA S film | | | | ⊚/× | ○/○ | ⊚/○ | ⊚/⊚ | ⊚/⊚ | ⊚/⊚ | ×/× | ×/× |
| PVA film/APEL film | | | | ⊚/× | ○/○ | ⊚/○ | ⊚/⊚ | ⊚/⊚ | ⊚/⊚ | ×/× | ×/× |

Compound names of components in Table 3 are as follows.

### [Component (D)]

ARONIX M-315: tris[2-(meth)acryloyloxyethyl]isocyanurate (manufactured by TOAGOSEI CO., LTD.)
ARONIX M-215: bis[2-(meth)acryloyloxyethyl)(2-hydroxyethyl) isocyanurate (manufactured by TOAGOSEI CO., LTD.)

### [Other components]

Irgacure 184: 1-hydroxycyclohexylphenyl ketone (manufactured by Ciba Specialty Chemicals)
Hitaloid 4861: urethane acrylate (manufactured by Hitachi Chemical Co., Ltd.)
KAYARAD DPHA: dipentaerythritol hexaacrylate (manufactured by NIPPON KAYAKU CO.,LTD.)

The component (A1), KURARAY POLYOL P-510, P-1010, C-2090, C-590 used as the component (B), the component (C), and SR-NPG and SANNIX GP-400 used as other components are the same as in Table 1 or 2.

Table 1 shows that the composites (laminated films) manufactured by using the radiation-curable compositions of the present invention as adhesives (Examples 1 to 9) have excellent cutting resistance (in 24 hours after irradiation). Furthermore, Table 2 shows that high peel strength as well as excellent cutting resistance can be obtained by using the compound represented by the formula (2) as the component (B) (Examples 10 to 17).

Table 3 shows that excellent initial cutting resistance (in 1 hour after irradiation) as well as excellent cutting resistance (in 24 hours after irradiation) can be obtained by additionally using the component (D) (Examples 18 to 22).

Tables 1 to 3 show that Comparative Examples 1 and 2 (corresponding to Comparative Examples 4 and 5 in Table 2, Comparative Examples 6 and 7 in Table 3) are inferior in cutting resistance (in 24 hours after irradiation), initial cutting resistance (in 1 hour after irradiation), and peel strength. Table 1 shows that Comparative Example 3 is inferior in cutting resistance.

A radiation-curable composition, thereby a formed body composed of a PVAresin and another adherend can be easily joined to forma composite, and the composite after joined can exhibit higher cutting resistance, is provided. The composition of the present invention comprises (A) a cycloaliphatic epoxy compound, (B) a compound having at least one hydroxyl group and a number average molecular weight of 500 or higher, and (C) a photoacid generator. Composite 1 is formed by laminating adherend 3 on one surface of PVA-formed body 2 via adhesive layer 4 composed of a cured product of the radiation-curable composition of the present invention.

## Claims

1. A radiation-curable composition comprising (A) a cycloaliphatic epoxy compound, (B) a compound having at least one hydroxyl group and a number average molecular weight of 500 or higher, and (C) a photoacid generator.

2. The radiation-curable composition according to Claim 1, wherein the component (A) is (A1) a compound having two or more cycloaliphatic epoxy groups in one molecule and/or (A2) a compoundhaving one cycloaliphatic epoxy group represented by the following formula (1); 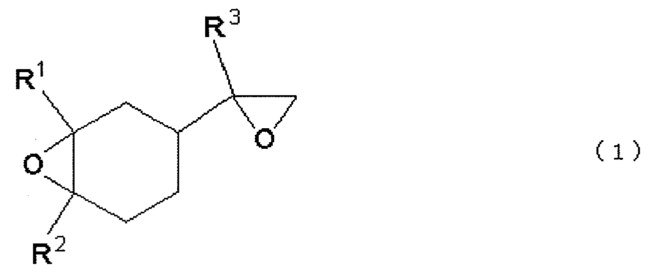 (in the formula, R¹, R², and R³ are each independently a hydrogen atom or a methyl group).

3. The radiation-curable composition according to Claim 1 or 2, wherein the component (B) has a number average molecular weight of 1,000 or higher.

4. The radiation-curable composition according to any one of Claims 1 to 3, wherein the component (B) is a compound represented by the following formula (2);
HO- (R⁴-O-CO-O)ₘ-(R⁵-O-CO-O)ₙ-R⁶-OH (2)
(in the formula, R⁴ and R⁵ are each independently a bivalent hydrocarbon group having 2 to 12 carbon atoms, R⁶ is the same as R⁴ or R⁵. m is 2 to 150, n is 0 to 150, and m+n is 2 to 200).

5. The radiation-curable composition according to any one of Claims 1 to 4, comprising (D) a compound represented by the following formula (4); 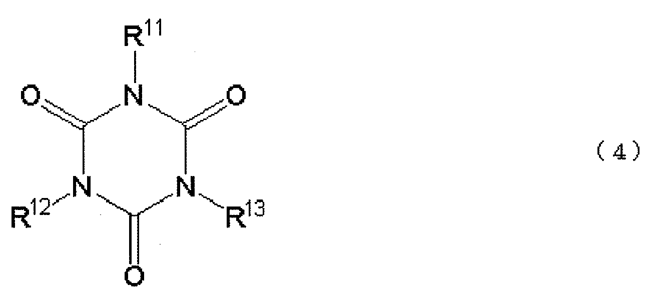 (in the formula, R¹¹, R¹², and R¹³ are each independently a monovalent organic group, and at least two of R¹¹ to R¹³ are -R¹⁴OCOCR¹⁵=CH₂, R¹⁴ is a divalent organic group having 2 to 8 carbons atoms, R¹⁵ is a hydrogen atom or a methyl group).

6. The radiation-curable composition according to any one of Claims 1 to 5, a cured product of which having a thickness of 200 µm has a light transmission of 70 % or higher at a wavelength of 550 nm.

7. The radiation-curable composition according to any one of Claims 1 to 6 , which is for use to join a PVA-formed body composed of a polyvinyl alcohol resin having a structure represented by the following formula (5) and an adherendmade of a material which is similar or dissimilar to the material of the PVA-formed body; 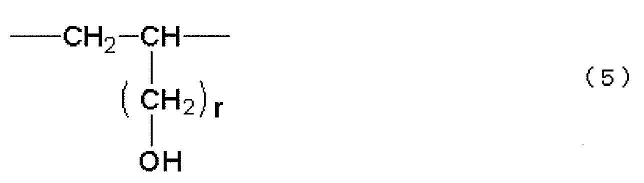 (in the formula, r is an integer of 0 to 4).

8. A composite formed by laminating an adherend on a PVA-formed body which is composed of a polyvinyl alcohol resin having a structure represented by the following formula (5) via an adhesive layer, the adherend being made of a material which is similar or dissimilar to the material of the PVA-formed body, wherein the adhesive layer is composed of a cured product of the radiation-curable composition according to any one of Claims 1 to 7; 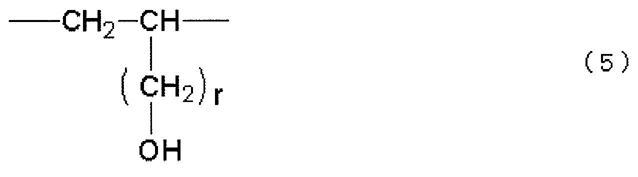 (in the formula, r is an integer of 0 to 4).

9. The composite according to Claim 8, wherein the adherend made of a material which is similar or dissimilar to the material of the PVA-formed body is a cyclic olefin resin film.

10. Amethod for manufacturing the composite according to Claim 8 or 9, comprising a step of laminating the adherend on the PVA-formed body via the radiation-curable composition, the adherend being made of a material which is similar or dissimilar to the material of the PVA-formed body, and a step of curing the radiation-curable composition by irradiating radiation to obtain the composite.
